# FASCICULE DE BREVET EUROPEEN

(11) **EP 1 074 863 B1**
(45) Date de publication et mention de la délivrance du brevet: **04.03.2015**
(21) Numéro de dépôt: 99115390.9
(22) Date de dépôt: 04.08.1999
(51) Int. Cl.: G02F 1/137, G02B 5/28

(54) **Dispositif optique à réflexion de Bragg et procédés pour sa fabrication**
Optischer Bragg-Reflektor und Verfahren zu dessen Herstellung
Bragg reflection optical device and methods of making the same

(43) Date de publication de la demande: 07.02.2001
(73) Titulaire: ASULAB S.A., 2501 Bienne (CH)
(72) Inventeur: Grupp, Joachim, 2003 Neuchâtel (CH); Kipfer, Peter, 2000 Neuchâtel (CH); Scharf, Toralf, 2000 Neuchâtel (CH); Bohley, Christian, 2000 Neuchâtel (CH); Klappert, Rolf, 2003 Neuchâtel (CH); Herzig, Hans Peter, 2000 Neuchâtel (CH)
(74) Mandataire: Ravenel, Thierry Gérard Louis

(56) Documents cités:
- EP-A- 0 872 759
- US-A- 5 691 789
- FUENFSCHILLING J ET AL: "VIDEO-COMPATIBLE SUBTRACTIVE COLOR PROJECTION WITH CHOLESTERIC LIQUID-CRYSTAL BAND-MODULATION FILTERS" JOURNAL OF THE SOCIETY FOR INFORMATION DISPLAY,US,SOCIETY FOR INFORMATION DISPLAY, SAN JOSE, vol. 4, no. 1, page 41-45 XP000578768 ISSN: 1071-0922

## Description

La présente invention concerne un dispositif optique à réflexion de Bragg pour réfléchir au moins une bande de longueur d'onde prédéterminée présente dans une lumière incidente, le dispositif comportant au moins un film de cristal liquide de type cholestérique. L'invention concerne aussi des procédés pour fabriquer de tels dispositifs optiques.

On rappelle qu'un cristal liquide de type cholestérique ne réfléchit, par réflexion de Bragg, que la lumière qui a la polarisation circulaire ayant le même sens de rotation que celle du cristal liquide. On notera que, dans la suite de la description, le coefficient de réflexion est égal à 1 quand la lumière d'une polarisation circulaire est complètement réfléchie.

La caractéristique de certains cristaux liquides cholestériques est de présenter une structure périodique en hélice ayant un pas qui peut être ajusté. Cette structure hélicoïdale provoque des réflexions de Bragg dont la bande de réflexion, c'est-à-dire la gamme de longueurs d'ondes qu'elle peut réfléchir, peut être facilement modifiée en choisissant d'autres valeurs du pas de l'hélice et/ou de la biréfringence du cristal liquide.

A partir de tels cristaux, on peut réaliser des dispositifs optiques, notamment pour l'affichage, en introduisant entre deux plaques ou substrats plusieurs cristaux liquides cholestériques ayant un ou plusieurs pas ajustés pour réfléchir respectivement une longueur d'onde correspondant à une couleur déterminée.

Un problème que l'on rencontre communément lors de la réalisation de tels dispositifs réside dans le fait que la couleur réfléchie, en particulier, la couleur rouge, a un aspect terne ou effacé.

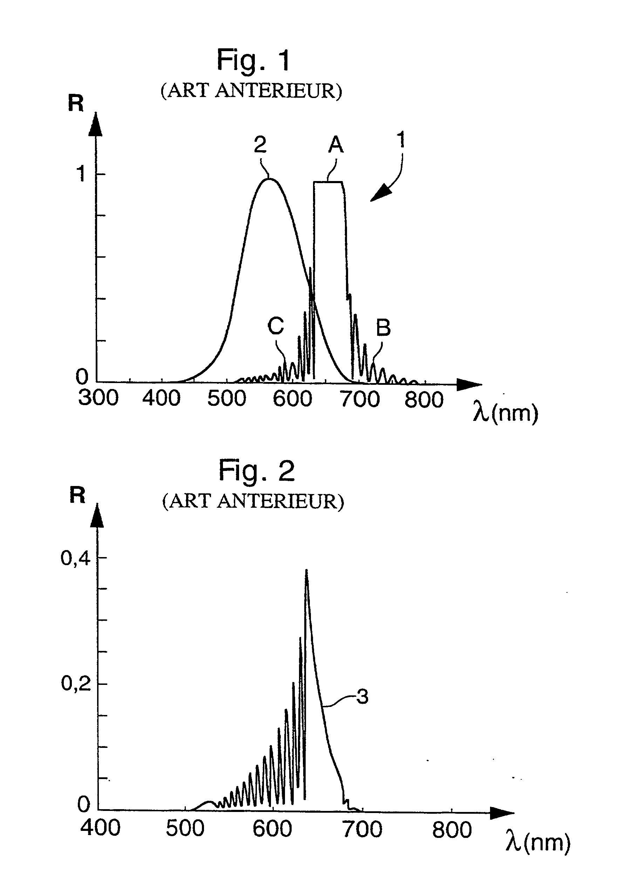

Pour expliquer ce phénomène, on se réfère ci-après à la figure 1 qui représente une courbe 1 illustrant le spectre de réflexion d'un dispositif optique à cristaux liquides cholestériques ajustés pour réfléchir la couleur rouge. On note que la réflexion par un tel cristal liquide des longueurs d'ondes λ correspondant à la couleur rouge est imparfaite. En effet, on peut décomposer la courbe 1 en une bande principale A correspondant à la réflexion de la couleur rouge, et en deux bandes latérales B et C de part et d'autre de la bande principale A. La présence des bandes latérales B et C a pour effet que la couleur rouge réfléchie par le dispositif optique n'est pas pure, c'est-à-dire n'est pas suffisamment saturée, ni suffisamment brillante.

On rappelle que la saturation est liée à la limitation du spectre de la longueur d'onde de la couleur rouge, et que la brillance est liée au fait que le coefficient de réflexion est proche de 1 ou non.

En outre, la caractéristique de l'oeil humain va accentuer l'effet indésirable de ces bandes latérales sur la pureté de la couleur rouge qu'il perçoit. La figure 1 représente une courbe 2 illustrant la réponse de l'oeil humain en fonction de la longueur d'onde λ de la lumière que l'oeil reçoit, c'est-à-dire pour toutes les couleurs du domaine visible (cette courbe étant également appelée courbe photopique). On note que l'oeil humain est le plus sensible en vision de jour (vision photopique) aux longueurs d'onde λ proches de la longueur d'onde de 555 nm, qui correspond au sommet de la courbe 2.

La figure 2 représente une courbe 3 illustrant la perception pour l'oeil de la couleur rouge réfléchie sur le dispositif optique ayant la caractéristique représentée par la courbe 1. Autrement dit, la figure 2 représente le spectre de réflexion de la couleur rouge multiplié par la réponse de l'oeil humain, en fonction de la longueur d'onde λ. On note en figure 2 que les effets de la bande latérale C des basses longueurs d'onde de la couleur rouge sont amplifiés par l'oeil humain, ce qui dégrade la couleur rouge et lui confère un aspect terne; elle devient alors rouge orangé.

On a observé que des phénomènes similaires se produisent avec la couleur bleue. Toutefois, les effets des bandes latérales sont plus amplifiés pour la couleur rouge que pour la couleur bleue, en raison de la courbe photopique de l'oeil humain.

Pour remédier à ce problème de pureté de la couleur émise par un dispositif optique de type susmentionné, il existe plusieurs types de solutions dans l'état de la technique.

Une première solution à ce problème de pureté est décrite dans l'ouvrage intitulé "Liquid Crystal in Complex Geometries", de Taylor et Francis, publié en 1996, page 257, et consiste à doper le cristal liquide avec un colorant qui est destiné à absorber les parties non désirées du spectre de réflexion.

Un inconvénient de la première solution est que l'effet optique obtenu n'est pas optimal. En effet, il se peut que la lumière réfléchie par le cristal liquide n'ait pas rencontré de molécules de colorant ou n'ait été modifiée que par peu de molécules de colorant, de sorte que la couleur est peu saturée ou, en d'autres termes, n'est pas pure.

Un autre inconvénient de cette solution est qu'elle impose que le mélange du cristal liquide et du colorant soit séparé physiquement des autres cristaux liquides réfléchissant respectivement le vert et le bleu, afin d'éviter la diffusion des molécules du colorant dans les cristaux liquides voisins de couleurs différentes. Ceci a pour effet d'augmenter la complexité du dispositif.

Un autre inconvénient réside dans le fait que le colorant a une absorption résiduelle pour des longueurs d'onde de la bande principale, ce qui a pour effet de diminuer la brillance.

Un autre inconvénient réside dans le fait que cette solution entraîne une absorption de la lumière transmise, ce qui empêche d'utiliser un empilement de plusieurs cellules à cristal liquide afin de combiner des effets optiques, par exemple de couleurs différentes.

Un autre inconvénient réside en la faible stabilité chimique des molécules formant le colorant, notamment en présence de rayonnement ultraviolet (UV), réduit la fiabilité et la durée de vie du dispositif d'affichage.

Une deuxième solution au problème de pureté susmentionné est décrite dans le document EP 0 872 759, dans le cas d'un dispositif d'affichage à cristaux liquides (LCD). Cette solution consiste à pourvoir le dispositif LCD d'un filtre pouvant absorber les longueurs d'onde visibles différentes de celle correspondant à la couleur que le cristal doit réfléchir. Ce filtre élimine du spectre réfléchi par le cristal liquide l'effet des bandes latérales décrites ci-dessus, de manière à rendre plus pure la couleur réfléchie.

Cette deuxième solution a aussi divers inconvénients. Elle nécessite l'agencement complexe du filtre absorbant, ce qui va à l'encontre des préoccupations de coût, d'encombrement et de rationalité qui sont habituelles dans l'industrie. En outre, elle nécessite l'agencement de couches d'égalisation pour permettre d'assurer une épaisseur constante des cristaux liquides sur toute la surface de la cellule, ce qui augmente la complexité d'un tel dispositif.

Cette solution a aussi l'inconvénient d'entraîner une absorption de la lumière transmise, ce qui empêche d'utiliser un empilement de plusieurs cellules à cristaux liquides afin de combiner leurs effets optiques.

Un objet de la présente invention est de fournir un dispositif optique palliant les inconvénients susmentionnés, notamment un dispositif optique capable de réfléchir ou de transmettre avec une pureté optimale une couleur prédéterminée ayant une longueur d'onde comprise dans le domaine du visible, par exemple la couleur rouge, ou en dehors de ce domaine, par exemple un rayonnement infrarouge.

Un autre objet de la présente invention est de fournir un dispositif pouvant réfléchir ou transmettre une couleur prédéterminée avec une saturation optimale.

Un autre objet de la présente invention est de fournir un dispositif pouvant réfléchir ou transmettre une couleur prédéterminée dont la brillance est optimale.

Un autre objet de la présente invention est de fournir un dispositif optique permettant de réfléchir ou de transmettre une pluralité de couleurs.

Un autre objet de la présente invention est de fournir un dispositif optique répondant aux préoccupations de coût, d'encombrement et de rationalité qui sont habituelles dans l'industrie.

Selon l'invention, il est prévu un dispositif optique du genre indiqué en préambule, tel que défini dans les revendications indépendantes 1 ou 2.

Un avantage du cristal liquide à gradient de biréfringence d'un tel dispositif optique est de pouvoir limiter le spectre de réflexion à une bande de longueur d'onde présentant des limites très nettes avec les longueurs d'onde voisines, et de rendre le coefficient de réflexion proche de 1. Il en résulte que la bande réfléchie par le dispositif optique est à la fois plus brillante et plus saturée, c'est-à-dire plus pure. De même, la lumière non réfléchie peut être transmise à travers le dispositif optique avec une grande pureté.

Le gradient de biréfringence peut être négatif ou positif, la biréfringence étant respectivement décroissante ou croissante en fonction de la profondeur comptée à partir de la face du film recevant la lumière incidente. Autrement dit, l'effet de suppression des bandes latérales est obtenu pour les deux sens de passage de la lumière à travers le film de cristal liquide.

Le gradient de biréfringence peut être constant ou variable en fonction de la profondeur comptée à la partir de la face du film recevant la lumière incidente.

Dans un mode de réalisation particulier, le film est formé par une pluralité de couches polymérisées d'un cristal liquide de type cholestérique pouvant réfléchir ladite bande de longueur d'onde prédéterminée, ces couches ayant des coefficients constants de biréfringence, différents d'une couche à l'autre et ordonnés graduellement de manière à former ledit gradient de biréfringence.

D'une façon générale, l'indice de réfraction extraordinaire nₑ peut varier linéairement ou non en fonction de la profondeur z, tandis que l'indice de réfraction ordinaire nₒ peut être constant ou variable.

Dans un autre mode de réalisation, le dispositif optique comporte une cellule contenant ledit film de cristal liquide, ladite cellule comportant des premier et deuxième substrats et un cadre de scellement qui délimitent une cavité contenant ledit film. Ce dispositif peut comporter en outre deux groupes d'électrodes disposés respectivement de part et d'autre du film et un circuit de commande connecté auxdites électrodes et agencé pour leur fournir sélectivement des tensions de commande, de manière à faire passer le cristal liquide d'un premier état, dans lequel il réfléchit la lumière de ladite bande, à un deuxième état dans lequel il est transparent à cette lumière, ou vice versa.

Dans les deux modes de réalisation précités, ledit dispositif peut comporter un empilement d'une pluralité desdits films de cristal liquide, chacun de ces films étant agencé pour réfléchir la lumière d'une bande de longueur d'onde différente.

La présente invention concerne également un procédé de fabrication d'un dispositif optique formé par une pluralité de couches polymérisées comme indiqué plus haut. Ce procédé comprend des étapes consistant à :
- se munir d'un substrat;
- déposer sur la surface supérieure dudit substrat une première couche de cristal liquide cholestérique polymérisable ayant un premier coefficient de biréfringence et réfléchissant une bande de longueur d'onde prédéterminée, et polymériser cette première couche;
- déposer et polymériser, successivement sur la couche précédente, des couches superposées de cristal liquide cholestérique polymérisable réfléchissant ladite bande de longueur d'onde prédéterminée et ayant des coefficient de biréfringence respectifs qui varient graduellement par rapport à celui de la couche précédente, de manière à former ledit film par un empilement de couches présentant ensemble un gradient de biréfringence dans l'épaisseur du film.

La présente invention concerne également un procédé de fabrication d'un dispositif optique comportant une cellule comme indiquée plus haut. Ce procédé comprend des étapes consistant à :
- fabriquer une cellule à cristaux liquides contenant un film formé d'un mélange composé de : un agent filtrant les rayonnements ultraviolets, un premier cristal liquide cholestérique ayant un premier coefficient de biréfringence et réfléchissant une bande de longueur d'onde prédéterminée, et un deuxième cristal liquide cholestérique ayant un deuxième coefficient de biréfringence différent dudit premier coefficient de biréfringence et réfléchissant ladite bande de longueur d'onde prédéterminée;
- produire une polymérisation du deuxième cristal liquide dans une partie supérieure du film en irradiant ledit mélange par un rayonnement ultraviolet à partir d'une face supérieure de la cellule, de sorte que le deuxième cristal liquide est fixé en majorité dans ladite partie supérieure par la polymérisation et que sa concentration diminue avec la profondeur dans le film.

Une telle méthode de ségrégation partielle par polymérisation variable avec la profondeur est connue notamment grâce aux brevets EP 606 940 et US 5 691 789, mais dans des procédés de fabrication utilisant un mélange de deux cristaux liquides ayant des pas différents, et non pas des biréfringences différentes. En effet, dans ces procédés il s'agit de fabriquer des polariseurs cholestériques qui présentent un gradient du pas des hélices cholestériques afin d'offrir une largeur de bande beaucoup plus grande que celle de l'art antérieur. Ceci va intrinsèquement à l'encontre de l'objet de la présente invention, qui vise à limiter avec précision la largeur de bande du dispositif optique. Toutefois les méthodes de polymérisation progressivement décroissante avec la profondeur qui sont mentionnées dans ces publications antérieures sont utilisables pour mettre en oeuvre l'invention décrite ici.

D'autres caractéristiques et avantages de la présente invention apparaîtront plus clairement à la lecture de la description détaillée de deux modes de réalisation préférés de l'invention, donnés à titre d'exemple uniquement, en relation avec les dessins annexés, dans lesquels :
- la figure 1 déjà citée représente le spectre de réflexion d'un réflecteur de Bragg classique pouvant réfléchir la couleur rouge, ainsi que la courbe photopique de l'oeil humain;
- la figure 2 déjà citée représente le spectre de réflexion de la figure 1 multiplié par la réponse photopique de l'oeil humain;
- la figure 3 représente un premier mode de réalisation du dispositif optique selon la présente invention;
- la figure 4 représente un premier profil de biréfringence relatif à la figure 3;
- la figure 5 représente un deuxième mode de réalisation du dispositif optique selon la présente invention;
- la figure 6 représente un deuxième profil de biréfringence relatif aux figures 3 et 5;
- la figure 7 représente le spectre de réflexion d'un dispositif optique selon les figures 3 ou 5; et
- les figures 8a à 8e représentent des troisième, quatrième, cinquième, sixième et septième profils de biréfringence relatifs aux figures 3 et 5.

Un homme du métier notera que la présente invention peut être appliquée dans un grand nombre de dispositifs optiques. A titre d'exemple, on va décrire ci-dessous deux modes de réalisation préférés, respectivement un filtre optique et un réflecteur de Bragg.

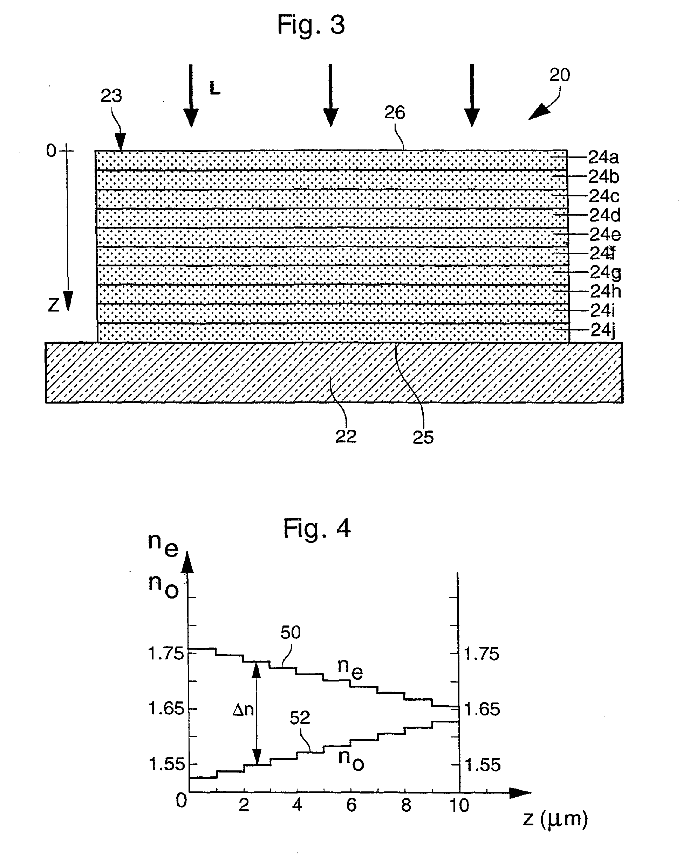

On va décrire le premier mode de réalisation, en référence à la figure 3 qui représente un filtre optique 20.

Le filtre optique 20 comporte un substrat transparent 22 et un film 23 à cristal liquide constitué d'une pluralité de couches polymères de cristaux liquides 24a à 24j formées par polymérisation, ces cristaux pouvant réfléchir une bande prédéterminée de longueurs d'onde, correspondant par exemple à la couleur rouge. Il va de soi que le nombre de couches polymères est cité à titre d'exemple uniquement. Dans l'exemple représenté en figure 3, les couches 24a à 24j sont empilées les unes sur les autres, de sorte que la surface inférieure 25 de la couche 24j est en contact intime avec la surface supérieure du substrat 22, et la surface supérieure 26 de la couche 24a reçoit une lumière incidente symbolisée par les flèches L en figure 3. Le substrat 22 peut être en verre ou en une matière plastique. Comme le substrat 22 est transparent, le filtre optique 20 transmet vers le bas toute la lumière incidente L, sauf la bande réfléchie vers le haut par réflexion de Bragg.

Les couches 24a à 24i sont formées de manière à avoir des coefficients de biréfringence constants, mais différents d'une couche à l'autre, de sorte qu'un gradient non nul de biréfringence est présent dans l'épaisseur du film 23. La figure 4 représente un premier profil de la biréfringence Δn relatif au film 23 en fonction de la profondeur z dans ce film. Plus précisément, la figure 4 représente une courbe 50 illustrant le profil de l'indice de réfraction extraordinaire nₑ et une courbe 52 illustrant le profil de l'indice de réfraction ordinaire nₒ, en fonction de la profondeur z. On rappelle que la biréfringence Δn est définie par Δn = nₑ-nₒ. Les courbes 50 et 52 sont des fonctions par paliers qui sont respectivement décroissante et croissante avec la profondeur z, de sorte que la biréfringence diminue avec la profondeur, c'est-à-dire présente un gradient négatif en fonction de la profondeur. Autrement dit, le film 23 est fortement biréfringent en surface (c'est-à-dire à z=0) et plus faiblement biréfringent avec la profondeur. A titre d'exemple uniquement, en relation avec la figure 4, la biréfringence vaut 0,23 pour z=0 et décroît de 0,023 par µm de profondeur.

Les couches 24a à 24i peuvent être formées selon un procédé de fabrication du genre utilisé pour réaliser un cristal liquide ayant un profil d'indice de réfraction global qui varie par paliers avec la profondeur z. Un tel procédé est décrit dans la littérature relative au domaine technique de l'invention, notamment dans le document EP 0 881 509 qui décrit un polariseur stratifié formé de plusieurs couches de cristaux liquides cholestériques polymérisés ayant différentes longueurs d'onde de la lumière réfléchie. Pour l'essentiel, en se référant à la figure 3 ci-jointe, le procédé de fabrication du film 23 comprend les étapes consistant à : déposer sur la surface supérieure du substrat 22 une première couche monomère de cristaux liquides cholestériques ayant une première valeur de biréfringence; polymériser la première couche pour former la couche 24j; et former successivement les couches 24i à 24a de façon semblable à la couche 24j, mais avec des cristaux liquides ayant des valeurs respectives de biréfringence graduellement plus basses, de sorte que les couches 24a à 24j forment le film 23 avec des valeurs de biréfringence ayant un profil tel que celui représenté en figure 4. En variante, on peut aussi déposer les couches avec une biréfringence croissante ou variant suivant une loi quelconque.

On note que le procédé de fabrication décrit dans le document EP 0 881 509 est mis en oeuvre dans un but opposé à celui de la présente invention. En effet, dans ce document, les bandes de réflexion sont élargies pour réfléchir tout le spectre du domaine visible, cette réflexion étant réalisée par un gradient du pas de la structure cholestérique.

On a expliqué plus haut que le filtre 20, en réfléchissant sélectivement une bande de longueur d'onde laisse passer tout le reste du spectre de la lumière incidente L. On conçoit ainsi qu'il est possible de superposer plusieurs filtres élémentaires du même genre, mais réfléchissant chacun une autre bande de longueur d'onde, pour former un filtre optique composé qui réfléchit la forme des spectres de réflexion des filtres élémentaires et transmet sensiblement la totalité des autres longueurs d'onde du spectre de la lumière incidente. On obtient ainsi un spectre de transmission "sur mesure" et bien défini, grâce à la netteté de la coupure entre les longueurs d'onde réfléchies et les longueurs d'onde transmises par chaque filtre élémentaire.

Il importe de noter que l'effet de suppression des bandes latérales dans la lumière réfléchie existe aussi si la lumière incidente L vient du bas, dans le cas de la figure 3, c'est-à-dire lorsque le gradient de biréfringence est positif en fonction de la profondeur. Cela signifie aussi que les profils d'indices 50 et 52 de la figure 4 pourraient être inversés de gauche à droite et fournir le même résultat optique. En d'autres termes, la couche inférieure 24j pourrait avoir la biréfringence la plus forte, et la couche supérieure 24a la biréfringence la plus faible.

On note également que le filtre optique 20 réalise la fonction de sélection de couleur, c'est-à-dire la même fonction qu'un polariseur coloré, sans qu'il soit nécessaire d'utiliser un polariseur circulaire, la structure cholestérique du film 23 réalisant une sélection de polarisation circulaire de la lumière incidente.

Il importe de noter que le dispositif optique représenté à la figure 3 peut aussi constituer un réflecteur. Dans ce cas, il y aura avantage à placer une couche réfléchissante sur la surface supérieure 25 du substrat 22.

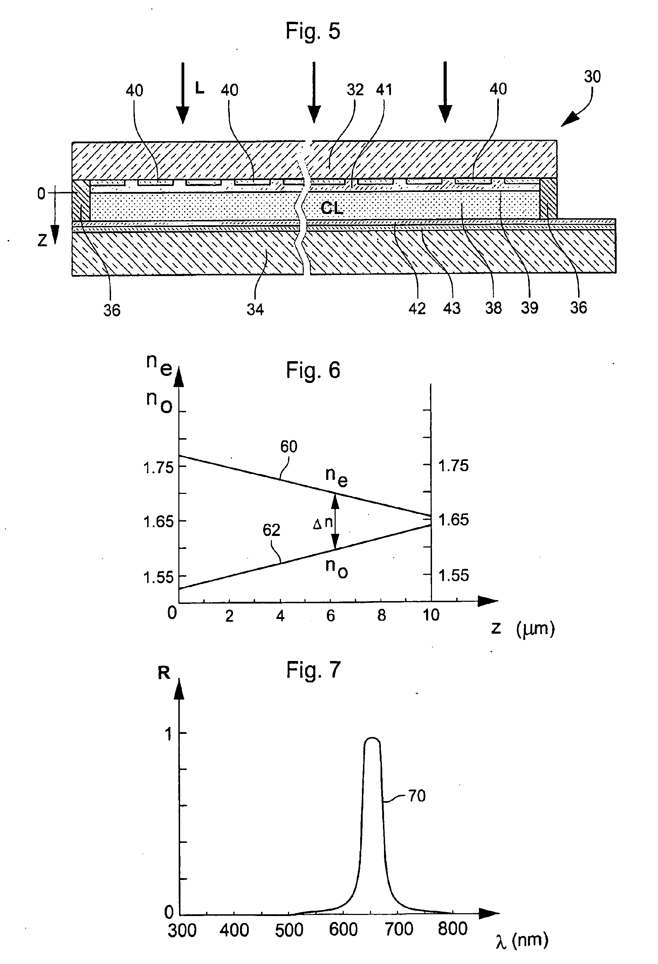

On va maintenant décrire un deuxième mode de réalisation, en relation avec la figure 5 qui représente une cellule à cristaux liquides qui constitue un réflecteur de Bragg 30.

Le réflecteur 30 comporte un premier substrat transparent 32 disposé sur un côté avant, c'est-à-dire sur le côté qui reçoit une lumière incidente symbolisée par les flèches L, et un deuxième substrat 34 disposé sur un côté arrière de sorte que le substrat 34 s'étend en regard du substrat 32 et parallèlement à ce dernier.

Les substrats 32 et 34 peuvent être réalisés en verre ou en une matière plastique, le substrat 34 pouvant être opaque, par exemple de couleur noire. Le substrat 34 peut aussi, comme cela est représenté en figure 5, être revêtu d'une couche 43 absorbant la lumière, par exemple une couche noire disposée sur la face du substrat 34 se trouvant en regard du substrat 32. Dans une autre réalisation, la couche 43 peut être réfléchissante.

Les substrats 32 et 34 sont reliés par l'intermédiaire d'un cadre de scellement 36 afin de délimiter entre eux une cavité pour contenir un film 38 de cristaux liquides (CL) de type cholestérique. Le film 38 est constitué d'un mélange de cristaux liquides et de polymères chiraux, formé de sorte qu'un gradient non nul de biréfringence en fonction de la profondeur est présent dans l'épaisseur du film 38.

La figure 6 représente un exemple de profil de la biréfringence Δn présentant un gradient négatif en fonction de la profondeur z dans le film 38. Plus précisément, la figure 6 représente une courbe 60 illustrant le profil de l'indice de réfraction extraordinaire nₑ et une courbe 62 illustrant le profil de l'indice de réfraction ordinaire nₒ, en fonction de la profondeur z. Les courbes 60 et 62 sont des fonctions respectivement décroissante et croissante avec la profondeur z, de sorte que le cristal liquide CL est fortement biréfringent à la surface supérieure 39 du film 38 (c'est-à-dire à z=0) et plus faiblement biréfringent en profondeur. A titre d'exemple uniquement, en relation avec la figure 6, la biréfringence vaut 0,23 pour z=0, et décroît de 0,023 par µm de profondeur.

Le film 38 peut être formé selon un procédé de fabrication utilisant un mélange comprenant : un agent filtrant les radiations UV; un premier cristal liquide cholestérique à faible biréfringence; et un deuxième cristal liquide cholestérique à biréfringence élevée (c'est-à-dire ayant une biréfringence sensiblement supérieure à celle du premier cristal liquide) sous forme d'un monomère polymérisable, par exemple au rayonnement ultraviolet. Dans ce mélange placé dans la cavité du réflecteur 30, on provoque une polymérisation du deuxième cristal liquide par un rayonnement UV provenant du dessus du réflecteur. Etant donné que la polymérisation diminue avec la profondeur z en raison de la présence de l'agent filtrant, le monomère du deuxième cristal liquide tend à se raréfier dans la partie supérieure du film, donc à remonter par diffusion et se polymériser en plus grande quantité là où la profondeur est faible. Il en résulte un gradient de la teneur en deuxième cristal liquide cholestérique polymérisé dans la partie supérieure du film (c'est-à-dire au voisinage de la surface), ce qui crée un profil de biréfringence semblable à celui de la figure 6.

A titre illustratif, à partir de simulations numériques, on a calculé le spectre de réflexion du réflecteur 30. Ce spectre est représenté par la courbe 70 dans la figure 7. On note que la courbe 70 ne comprend plus de bandes latérales (contrairement à la courbe 1 de la figure 1) et est centrée sur une longueur d'onde de 650 nm, c'est-à-dire sensiblement celle de la couleur rouge. Les flancs du pic de réflexion sont quasi verticaux, ce qui assure une grande pureté de couleur. On note également que la valeur du coefficient de réflexion correspondant à la longueur d'onde de la couleur rouge est sensiblement égale à 1, d'où il résulte une optimisation de la brillance de la couleur rouge réfléchie.

Autrement dit, on a observé que le gradient de biréfringence présent dans la profondeur du film 38 a pour effet de limiter le spectre de réflexion à la gamme de longueurs d'onde de la couleur désirée (c'est-à-dire la couleur rouge dans l'exemple de la figure 5), et de rendre le coefficient de réflexion proche de 1. Il en résulte que la couleur désirée réfléchie par le réflecteur 30 est à la fois plus saturée et plus brillante, c'est-à-dire plus pure.

On a également calculé qu'il existe un gradient minimal de biréfringence au-delà duquel la qualité du réflecteur 30 est sensiblement améliorée. Par exemple, dans le cas où le gradient de biréfringence est présent sur 10% de l'épaisseur du film 38, le gradient minimal de biréfringence est d'environ 0,1/µm et dans le cas où le gradient de biréfringence est présent sur toute l'épaisseur du film 38, le gradient minimal de biréfringence est d'environ 0,01/µm. Pour les cas intermédiaires, la valeur du gradient minimal peut être interpolée en fonction de la portion de l'épaisseur dans laquelle il est présent.

On note que le réflecteur 30 réalise la même fonction de sélection de couleur qu'un polariseur coloré, sans qu'il soit nécessaire d'utiliser un polariseur circulaire, puisque la structure cholestérique de la cellule 38 réalise une sélection de polarisation circulaire de la lumière incidente.

A titre de variante, on peut réaliser un réflecteur à cellule commutable à partir du réflecteur 30, comme le représente la figure 5. A cet effet, le cristal liquide CL est commandé pour avoir au moins deux états, c'est-à-dire un premier état dans lequel il réfléchit la lumière d'une gamme de longueur d'ondes correspondant à une couleur prédéterminée, par exemple la couleur rouge, et un deuxième état dans lequel il est transparent à la lumière.

La surface du substrat 32 tournée vers le substrat 34 porte un premier groupe d'électrodes 40. La surface du substrat 34 tournée vers le substrat 32 comprend un deuxième groupe d'électrodes 42 disposées, par exemple, sous forme de bandes perpendiculaires aux électrodes 40. Chacune des électrodes 40 et 42 peut être formée par une bande conductrice déposée et structurée par des techniques classiques, et réalisée de préférence en oxyde d'étain-indium (ITO). Le réflecteur 30 est connecté de manière connue à un circuit de commande des électrodes 40 et 42, ce circuit pouvant fournir des tensions de commande appropriées à des électrodes sélectionnées pour modifier les conditions optiques du cristal liquide situé au point de croisement des électrodes 40 et 42 considérées, c'est-à-dire le commuter dans l'un de ses deux états décrits ci-dessus ou dans un état intermédiaire entre ces deux états.

A titre de perfectionnement et comme le représente la figure 5, la cellule commutable du réflecteur 30 peut comprendre une couche d'alignement 41 disposée entre le film 38 et les électrodes 40. Un avantage d'un tel agencement de la couche d'alignement 41 est de former une barrière diélectrique nécessaire pour la fiabilité du réflecteur 30 à cellule commutable.

Il va de soi pour un homme du métier que la description ci-dessus peut subir diverses modifications sans sortir du cadre de la présente invention.

A titre de variante, on peut former la cellule du dispositif optique de manière à réfléchir une couleur du domaine visible autre que la couleur rouge, par exemple la couleur bleue, ou un rayonnement en dehors du domaine visible, par exemple un rayonnement infrarouge.

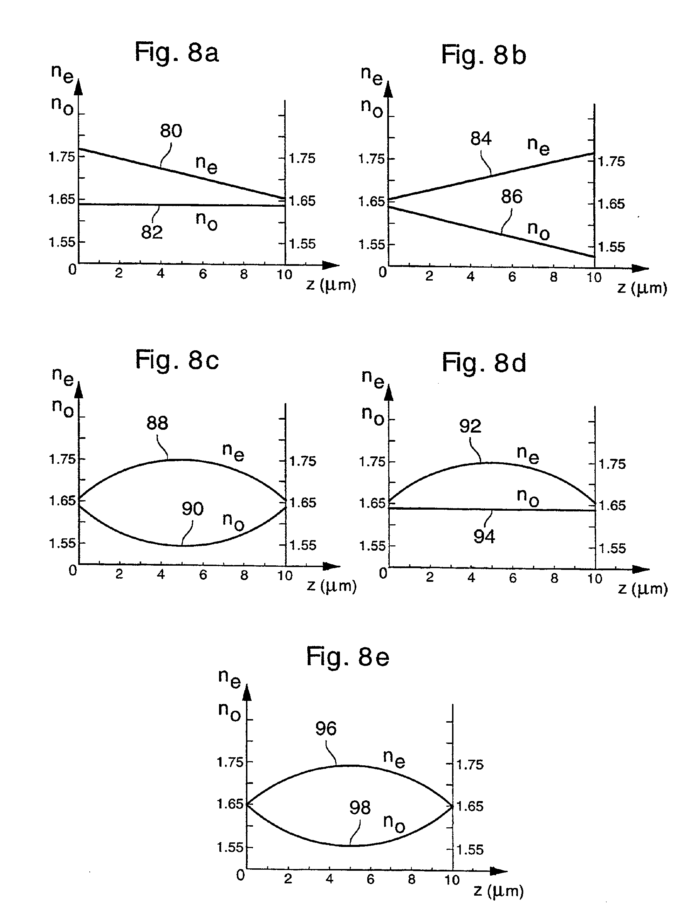

A titre de variantes de réalisation, on peut former un film ayant un gradient non nul de biréfringence présent soit dans une partie, soit dans la totalité de l'épaisseur de ce film, selon l'un des profils de biréfringence représentés aux figures 8a et 8e.

La figure 8a illustre un troisième profil de biréfringence représenté par une courbe 80 relative à l'indice de réfraction ne et une courbe 82 relative à l'indice de réfraction nₒ. On note que la courbe 80 est une fonction décroissante avec la profondeur z, et que la courbe 82 est une fonction constante avec la profondeur z. Il en résulte un gradient de la biréfringence, celle-ci étant maximale en haut du film 38 (c'est-à-dire à z = 0).

La figure 8b illustre un quatrième profil de biréfringence représenté par une courbe 84 relative à l'indice ne et par une courbe 86 relative à l'indice nₒ. On note que la courbe 84 est une fonction croissante de la profondeur z, et que la courbe 86 est une fonction décroissante de la profondeur z. Il en résulte un gradient de la biréfringence, celle-ci étant maximale au bas du film 38 (c'est-à-dire à z = 10 µm).

La figure 8c illustre un cinquième profil de biréfringence représenté par une courbe 88 relative à l'indice ne et par une courbe 90 relative à l'indice nₒ. On note que la courbe 88 correspond à une alternance sinusoïdale positive de la profondeur z, et que la courbe 90 correspond à une alternance sinusoïdale négative de la profondeur z. Il en résulte un gradient variable de la biréfringence, celle-ci étant maximale au milieu du film 38 (c'est-à-dire à z = 5 µm) et minimale près des faces du film.

La figure 8d illustre un sixième profil de biréfringence représenté par une courbe 92 relative à l'indice ne et par une courbe 94 relative à l'indice nₒ. On note que la courbe 92 correspond à une alternance sinusoïdale positive de la profondeur z, et que la courbe 94 est une fonction constante de la profondeur z. Il en résulte un gradient variable de la biréfringence, celle-ci étant maximale au milieu du film 38 (c'est-à-dire à z = 5 µm).

Le film 8e illustre un septième profil de biréfringence représenté par une courbe 96 relative à l'indice ne, et par une courbe 98 relative à l'indice nₒ. On note que la courbe 96 correspond à une alternance sinusoïdale positive de la profondeur z, et que la courbe 98 correspond à une alternance sinusoïdale négative de la profondeur z, les indices ne et nₒ ayant les mêmes valeurs à z = 0 µm et à z = 10 µm, c'est-à-dire au niveau des deux faces du film 38. La biréfringence présente ainsi un gradient variable et elle est maximale au milieu du film 38 (c'est-à-dire à z = 5 µm).

A titre de variante également, on peut réaliser un empilement de films optiques selon la présente invention, chacun de ces dispositifs pouvant sélectionner par la réflexion de Bragg une bande prédéterminée, de sorte que l'empilement peut réfléchir plusieurs bandes de longueurs d'onde prédéterminées, car la lumière d'une bande réfléchie par un film placé en position inférieure (si la lumière incidente vient du haut) pourra traverser un film placé plus haut qui ne réfléchit pas dans cette bande. Par une combinaison judicieuse des diverses bandes de réflexion des différents films, on peut créer n'importe quel spectre de réflexion désiré, ainsi qu'un spectre de transmission qui correspond au spectre de la lumière incidente moins les bandes du spectre de réflexion.

## Revendications

1. Dispositif optique (20) à réflexion de Bragg pour réfléchir au moins une bande de longueur d'onde prédéterminée présente dans une lumière incidente, le dispositif comportant au moins un film (23) de cristal liquide de type cholestérique, **caractérisé en ce que** le film de cristal liquide comprend au moins deux couches polymérisées (24a-24j) susceptibles de réfléchir la même bande de longueur d'onde prédéterminée, chaque couche ayant une biréfringence différente pour présenter ensemble un gradient de biréfringence en fonction de la profondeur (z) dans ledit film.

2. Dispositif optique (30) à réflexion de Bragg pour réfléchir au moins une bande de longueur d'onde prédéterminée présente dans une lumière incidente, le dispositif comportant une cellule contenant un film (38) de cristal liquide, ladite cellule comportant des premier et deuxième substrats (34, 32), et un cadre de scellement (36) qui délimitent une cavité contenant ledit film, ledit film (38) comprenant un mélange de deux cristaux liquides de type cholestérique ayant des biréfringences différentes, l'un desdits cristaux liquides étant fixé par polymérisation dans le film de façon à être présent avec une concentration qui varie avec ladite profondeur (z) dans ledit film de sorte que le film présente, dans au moins une partie de son épaisseur, un gradient de biréfringence en fonction de la profondeur (z) dans ledit film, **caractérisé en ce que** les cristaux liquides réfléchissent tous deux la même dite bande de longueur d'onde prédéterminée.

3. Dispositif optique selon la revendication 1, **caractérisé en ce que** ledit film (23) est formé par une pluralité de couches polymérisées (24a-24j) d'un cristal liquide de type cholestérique pouvant réfléchir ladite bande de longueur d'onde prédéterminée, ces couches ayant des coefficients constants de biréfringence, différents d'une couche à l'autre et ordonnés graduellement de manière à former ledit gradient de biréfringence.

4. Dispositif optique selon la revendication 2, **caractérisé en ce qu'**il comporte en outre deux groupes d'électrodes (40, 42) disposés respectivement de part et d'autre du film (38) et un circuit de commande connecté auxdites électrodes et agencé pour leur fournir sélectivement des tensions de commande, de manière à faire passer le cristal liquide d'un premier état, dans lequel il réfléchit la lumière de ladite bande, à un deuxième état dans lequel il est transparent à cette lumière, ou vice versa.

5. Dispositif optique selon la revendication 1, **caractérisé en ce que** ledit gradient de biréfringence est négatif, la biréfringence (Δn) étant décroissante en fonction de la profondeur (z) comptée à partir de la face du film (23) destinée à recevoir une lumière incidente.

6. Dispositif optique selon la revendication 5, **caractérisé en ce que** ledit film présente un indice de réfraction extraordinaire (nₑ) qui diminue en fonction de la profondeur (z).

7. Dispositif optique selon la revendication 5 ou 6, **caractérisé en ce que** ledit film présente un indice de réfraction ordinaire (nₒ) qui augmente en fonction de la profondeur (z).

8. Dispositif optique selon la revendication 1, **caractérisé en ce que** ledit gradient de biréfringence est positif, la biréfringence (Δn) étant croissante en fonction de la profondeur (z) comptée à partir de la face du film (23) destinée à recevoir une lumière incidente.

9. Dispositif optique selon la revendication 8, **caractérisé en ce que** ledit film présente un indice de réfraction extraordinaire (nₑ) qui augmente en fonction de la profondeur (z).

10. Dispositif optique selon la revendication 8 ou 9, **caractérisé en ce que** ledit film présente un indice de réfraction ordinaire (nₒ) qui diminue en fonction de la profondeur (z).

11. Dispositif optique selon la revendication 6 ou 9, **caractérisé en ce que** ledit film présente un indice de réfraction ordinaire (nₒ) constant.

12. Dispositif optique selon la revendication 1, **caractérisé en ce que** ledit gradient de biréfringence varie en fonction de la profondeur (z) comptée à partir de la face du film (23, 38) destinée à recevoir une lumière incidente.

13. Dispositif optique selon la revendication 12, **caractérisé en ce que** la biréfringence est maximale au milieu de l'épaisseur du film et minimale ou nulle près des faces du film.

14. Dispositif optique selon l'une des revendications 1 à 11, **caractérisé en ce que** la valeur absolue du gradient de biréfringence est supérieure à une valeur minimale, ladite valeur minimale par unité de profondeur étant interpolée entre 0,1/µm, quand le gradient de biréfringence est présent sur 10 % de l'épaisseur du film, et 0,01/µm quand le gradient de biréfringence est présent sur la totalité de l'épaisseur du film.

15. Dispositif optique selon l'une des revendications précédentes, **caractérisé en ce qu'**il comporte un empilement d'une pluralité desdits films (23, 38) de cristal liquide, chacun de ces films étant agencé pour réfléchir la lumière d'une bande de longueur d'onde différente.

16. Dispositif optique selon l'une des revendications 1 à 14, **caractérisé en ce qu'**il comporte une couche réfléchissante (43) disposée, par rapport au film (38), du côté opposé à celui destiné à recevoir une lumière incidente.

17. Dispositif optique selon l'une des revendications 1 à 15, **caractérisé en ce qu'**il constitue un filtre agencé pour réfléchir ladite bande ou lesdites bandes de longueur d'onde de la lumière incidente par le ou les films de cristal liquide (23, 38) et pour laisser passer le reste du spectre de la lumière incidente.

18. Procédé de fabrication d'un dispositif optique (20) selon la revendication 3, comprenant des étapes consistant à :
- se munir d'un substrat (22);
- déposer sur la surface supérieure dudit substrat une première couche (24j) de cristal liquide cholestérique polymérisable ayant un premier coefficient de biréfringence et réfléchissant une bande de longueur d'onde prédéterminée, et polymériser cette première couche;
- déposer et polymériser, successivement sur la couche précédente, des couches superposées (24i-24a) de cristal liquide cholestérique polymérisable réfléchissant ladite bande de longueur d'onde prédéterminée et ayant des coefficient de biréfringence respectifs qui varient graduellement par rapport à celui de la couche précédente, de manière à former ledit film par un empilement de couches présentant ensemble un gradient de biréfringence dans l'épaisseur du film.

19. Procédé de fabrication d'un dispositif optique (30) selon la revendication 2, comprenant des étapes consistant à :
- fabriquer une cellule à cristaux liquides contenant un film formé d'un mélange composé de : un agent filtrant les rayonnements ultraviolets, un premier cristal liquide cholestérique ayant un premier coefficient de biréfringence et réfléchissant une bande de longueur d'onde prédéterminée, et un deuxième cristal liquide cholestérique ayant un deuxième coefficient de biréfringence différent dudit premier coefficient de biréfringence et réfléchissant ladite bande de longueur d'onde prédéterminée;
- produire une polymérisation du deuxième cristal liquide dans une partie supérieure du film en irradiant ledit mélange par un rayonnement ultraviolet à partir d'une face supérieure de la cellule, de sorte que le deuxième cristal liquide est fixé en majorité dans ladite partie supérieure par la polymérisation et que sa concentration diminue avec la profondeur (z) dans le film.

20. Utilisation d'un dispositif optique selon l'une des revendications 1 à 15 comme filtre transmettant la lumière incidente en dehors du spectre formé par ladite bande ou lesdites bandes de longueur d'onde et réfléchi sélectivement par ledit film ou lesdits films.

## Patentansprüche

1. Optische Bragg-Reflexionsvorrichtung (20), um wenigstens einen in einem einfallenden Licht vorhandenen Streifen vorbestimmter Wellenlänge zu reflektieren, wobei die Vorrichtung wenigstens einen Film (23) Flüssigkristalls von cholesterischer Art umfasst, **dadurch gekennzeichnet, dass** der Flüssigkristallfilm wenigstens zwei polymerisierte Schichten (24a-24j) umfasst, die fähig sind, den gleichen Streifen vorbestimmter Wellenlänge zu reflektieren, wobei jede Schicht eine unterschiedliche Doppelbrechung hat, um gemeinsam einen Doppelbrechungsgradienten in Abhängigkeit von der Tiefe (z) im Film aufzuweisen.

2. Optische Bragg-Reflexionsvorrichtung (30), um wenigstens einen in einem einfallenden Licht vorhandenen Streifen vorbestimmter Wellenlänge zu reflektieren, wobei die Vorrichtung eine Zelle umfasst, die einen Flüssigkristallfilm (38) enthält, wobei diese Zelle ein erstes und ein zweites Substrat (34, 32) sowie einen Versiegelungsrahmen (36) umfasst, die einen den Film enthaltenden Hohlraum begrenzen, wobei der Film (38) eine Mischung aus zwei Flüssigkristallen von cholesterischer Art umfasst, die unterschiedliche Doppelbrechungen aufweisen, wobei einer der Flüssigkristalle durch Polymerisation im Film derart fixiert wird, dass er mit einer Konzentration präsent ist, die mit der Tiefe (z) im Film variiert, so dass der Film in wenigstens einem Teil seiner Dicke einen Doppelbrechungsgradienten in Abhängigkeit von der Tiefe (z) im Film aufweist, **dadurch gekennzeichnet, dass** die Flüssigkristalle alle beide den gleichen Streifen vorbestimmter Wellenlänge reflektieren.

3. Optische Vorrichtung nach Anspruch 1, **dadurch gekennzeichnet, dass** der Film (23) von einer Vielzahl polymerisierter Schichten (24a-24j) eines Flüssigkristalls von cholesterischer Art, der den Streifen vorbestimmter Wellenlänge reflektieren kann, gebildet ist, wobei diese Schichten konstante Doppelbrechungskoeffizienten aufweisen, die von einer Schicht zur anderen verschieden sind und graduell geordnet sind, um den Doppelbrechungsgradienten zu bilden.

4. Optische Vorrichtung nach Anspruch 2, **dadurch gekennzeichnet, dass** sie zudem zwei Gruppen von Elektroden (40, 42), die beziehungsweise beiderseits des Films (38) angeordnet sind, und eine Steuerschaltung umfasst, die an die Elektroden angeschlossen ist und derart beschaffen ist, dass sie diesen Letzteren selektiv Steuerspannungen liefert, um den Flüssigkristall aus einem ersten Zustand, in dem er das Licht des Streifens reflektiert, in einen zweiten Zustand, in dem er für dieses Licht transparent ist, übergehen zu lassen, oder umgekehrt.

5. Optische Vorrichtung nach Anspruch 1, **dadurch gekennzeichnet, dass** der Doppelbrechungsgradient negativ ist, wobei die Doppelbrechung (Δn) in Abhängigkeit von der Tiefe (z) ab der für den Empfang eines einfallenden Lichts bestimmten Oberfläche des Films (23) abnehmend ist.

6. Optische Vorrichtung nach Anspruch 5, **dadurch gekennzeichnet, dass** der Film einen extraordinären Brechungsindex (nₑ) aufweist, der in Abhängigkeit von der Tiefe (z) abnimmt.

7. Optische Vorrichtung nach Anspruch 5 oder 6, **dadurch gekennzeichnet, dass** der Film einen normalen Brechungsindex (nₒ) aufweist, der in Abhängigkeit von der Tiefe (z) zunimmt.

8. Optische Vorrichtung nach Anspruch 1, **dadurch gekennzeichnet, dass** der Doppelbrechungsgradient positiv ist, wobei die Doppelbrechung (Δn) in Abhängigkeit von der Tiefe (z) ab der für den Empfang eines einfallenden Lichts bestimmten Oberfläche des Films (23) zunehmend ist.

9. Optische Vorrichtung nach Anspruch 8, **dadurch gekennzeichnet, dass** der Film einen extraordinären Brechungsindex (nₑ) aufweist, der in Abhängigkeit von der Tiefe (z) zunimmt.

10. Optische Vorrichtung nach Anspruch 8 oder 9, **dadurch gekennzeichnet, dass** der Film einen normalen Brechungsindex (nₒ) aufweist, der in Abhängigkeit von der Tiefe (z) abnimmt.

11. Optische Vorrichtung nach Anspruch 6 oder 9, **dadurch gekennzeichnet, dass** der Film einen konstanten normalen Brechungsindex (nₒ) aufweist.

12. Optische Vorrichtung nach Anspruch 1, **dadurch gekennzeichnet, dass** der Doppelbrechungsgradient in Abhängigkeit von der Tiefe (z) ab der für den Empfang eines einfallenden Lichts bestimmten Oberfläche des Films (23, 38) variiert.

13. Optische Vorrichtung nach Anspruch 12, **dadurch gekennzeichnet, dass** die Doppelbrechung in der Mitte der Dicke des Films maximal und in der Nähe der Oberflächen des Films minimal oder gleich Null ist.

14. Optische Vorrichtung nach einem der Ansprüche 1 bis 11, **dadurch gekennzeichnet, dass** der Absolutwert des Doppelbrechungsgradienten grösser ist als ein Tiefstwert, wobei der Tiefstwert pro Tiefeneinheit zwischen 0,1/µm, wenn der Doppelbrechungsgradient über 10% der Dicke des Films präsent ist, und 0,01/µm, wenn der Doppelbrechungsgradient über die Gesamtheit der Dicke des Films präsent ist, interpoliert ist.

15. Optische Vorrichtung nach einem der vorhergehenden Ansprüche, **dadurch gekennzeichnet, dass** sie einen Stapel einer Vielzahl der Flüssigkristallfilme (23, 38) umfasst, wobei jeder dieser Filme derart beschaffen ist, dass er das Licht eines Streifens unterschiedlicher Wellenlänge reflektiert.

16. Optische Vorrichtung nach einem der Ansprüche 1 bis 14, **dadurch gekennzeichnet, dass** sie eine reflektierende Schicht (43) umfasst, die im Verhältnis zum Film (38) auf der Seite angeordnet ist, die derjenigen, die für den Empfang eines einfallenden Lichts bestimmt ist, entgegengesetzt ist.

17. Optische Vorrichtung nach einem der Ansprüche 1 bis 15, **dadurch gekennzeichnet, dass** sie einen Filter bildet, der derart beschaffen ist, dass er den oder die besagten Wellenlängenstreifen des einfallenden Lichts durch den oder die Flüssigkristallfilme (23, 38) reflektiert und den Rest des Spektrums des einfallenden Lichts durchgehen lässt.

18. Verfahren zum Herstellen einer optischen Vorrichtung (20) nach Anspruch 3, das folgende Schritte umfasst:
- Bereitstellen eines Substrats (22);
- Aufbringen einer ersten Schicht (24j) polymerisierbaren cholesterischen Flüssigkristalls auf die Oberseite des Substrats, wobei diese Schicht einen ersten Doppelbrechungskoeffizienten aufweist und einen Streifen vorbestimmter Wellenlänge reflektiert, und Polymerisieren dieser ersten Schicht;
- sukzessives Aufbringen auf die vorhergehende Schicht und Polymerisieren einander überlagernder Schichten (24i-24a) polymerisierbaren cholesterischen Flüssigkristalls, die den Streifen vorbestimmter Wellenlänge reflektieren und jeweilige Doppelbrechungskoeffizienten aufweisen, die im Verhältnis zu demjenigen der vorhergehenden Schicht graduell variieren, um den Film durch einen Stapel von Schichten zu bilden, die gemeinsam einen Doppelbrechungsgradienten in der Dicke des Films aufweisen.

19. Verfahren zum Herstellen einer optischen Vorrichtung (30) nach Anspruch 2, das folgende Schritte umfasst:
- Herstellen einer Flüssigkristallzelle, die einen Film enthält, der von einer Mischung gebildet ist, die aus folgenden Elementen besteht: ein die Ultraviolett-Strahlungen filtrierendes Mittel, ein erster cholesterischer Flüssigkristall, der einen ersten Doppelbrechungskoeffizienten aufweist und einen Streifen vorbestimmter Wellenlänge reflektiert, und ein zweiter cholesterischer Flüssigkristall, der einen zweiten Doppelbrechungskoeffizienten, der verschieden vom ersten Doppelbrechungskoeffizienten ist, aufweist und den Streifen vorbestimmter Wellenlänge reflektiert;
- Erzeugen einer Polymerisation des zweiten Flüssigkristalls in einem oberen Teil des Films, indem die Mischung ausgehend von einer Oberseite der Zelle durch eine Ultraviolett-Strahlung derart bestrahlt wird, dass der zweite Flüssigkristall durch die Polymerisation grösstenteils im oberen Teil fixiert wird und dass seine Konzentration mit der Tiefe (z) im Film abnimmt.

20. Verwendung einer optischen Vorrichtung nach einem der Ansprüche 1 bis 15 als Filter, der das einfallende Licht ausserhalb des Spektrums, das von dem oder den besagten Wellenlängenstreifen gebildet ist und selektiv durch den oder die besagten Filme reflektiert wird, überträgt.

## Claims

1. Bragg reflection optical device (20) for reflecting at least one predetermined wavelength band present in an incident light, the device including at least one film (23) of cholesteric type liquid crystal, **characterised in that** the liquid crystal film includes at least two polymerised layers (24a-24j) able to reflect the same predetermined wavelength band, each layer having a different birefringence for having a birefringence gradient as a function of the depth (z) in said film.

2. Bragg reflection optical device (30) for reflecting at least one predetermined wavelength band present in an incident light, the device including a cell containing one film (38) of liquid crystal, said cell including first and second substrates (34, 32) and a sealing frame (36) which delimit a cavity containing said film, said film (38) including a mixture of two liquid crystals of cholesteric type having different birefringences, one of said liquid crystals being fixed by polymerisation in the film so as to be present with a concentration which varies with said depth (z) in said film so that said film has, in at least a portion of its thickness, a birefringence gradient as a function of the depth (z) in said film, **characterized in that** the liquid crystals reflect together the same predetermined wavelength band.

3. Optical device according to claim 1, **characterised in that** said film (23) is formed of a plurality of polymerised layers (24a-24j) of cholesteric type liquid crystal able to reflect said predetermined wavelength band, these layers having constant birefringence coefficients, which differ from one layer to another, and ordered gradually so as to form said birefringence gradient.

4. Optical device according to claim 2, **characterised in that** it further includes two groups of electrodes (40, 42) arranged respectively on either side of the film (38) and a control circuit connected to said electrodes and arranged to supply them selectively with control voltages, so as to cause the liquid crystal to switch from a first state, in which it reflects light from said band, to a second state, in which it is transparent to said light, or vice versa.

5. Optical device according to claim 1, **characterised in that** said birefringence gradient is negative, the birefringence (Δn) decreasing as a function of the depth (z) counted from the face of the film (23, 38) receiving the incident light.

6. Optical device according to claim 5, **characterised in that** said film has an extraordinary refractive index (nₑ) which decreases as a function of the depth (z).

7. Optical device according to claim 5 or 6, **characterised in that** said film has an ordinary refractive index (nₒ) which increases as a function of the depth (z).

8. Optical device according to claim 1, **characterised in that** said birefringence gradient is positive, the birefringence (Δn) increasing as a function of the depth (z) counted from the face of the film (23, 38) receiving the incident light.

9. Optical device according to claim 8, **characterised in that** said film has an extraordinary refractive index (nₑ) which increases as a function of the depth (z).

10. Optical device according to claim 8 or 9, **characterised in that** said film has an ordinary refractive index (nₒ) which decreases as a function of the depth (z).

11. Optical device according to claim 6 or 9, **characterised in that** said film has a constant ordinary refractive index (nₒ).

12. Optical device according to claim 1, **characterised in that** said birefringence gradient varies as a function of the depth (z) counted from the face of the film (23, 38) receiving the incident light.

13. Optical device according to claim 12, **characterised in that** the birefringence is maximum in the middle of the thickness of the film and minimum or zero close to the faces of the film.

14. Optical device according to any of claims 1 to 11, **characterised in that** the absolute value of the birefringence gradient is greater than a minimum value, said minimum value per unit of depth being interpolated between 0.1/µm, when the birefringence gradient is present over 10% of the thickness of the film, and 0.01/µm when the birefringence gradient is present over the entire thickness of the film.

15. Optical device according to any of the preceding claims, **characterised in that** it includes a stack of a plurality of said liquid crystal films (23, 38), each of said films being arranged to reflect the light of a different wavelength band.

16. Optical device according to any of claims 1 to 14, **characterised in that** it includes a reflective layer (43) arranged, with respect to the film (38), on the opposite side to that of the incident light.

17. Optical device according to any of claims 1 to 15, **characterised in that** it constitutes a filter arranged to reflect said incident light wavelength band or bands by the liquid crystal film or films (23, 38) and to let the rest of the incident light spectrum pass.

18. Method for manufacturing an optical device (20) according to claim 3, including the steps of:
- providing a substrate (22);
- depositing on the top surface of said substrate a first layer (24) of polymerisable cholesteric liquid crystal having a first birefringence coefficient and reflecting a predetermined wavelength band, and polymerising said first layer;
- depositing and polymerising, in succession on the preceding layer, superposed layers (24i-24a) of polymerisable cholesteric liquid crystal reflecting said predetermined wavelength band and having respective birefringence coefficients which vary gradually with respect to that of the preceding layer, so as to form said film by a stack of layers together having a birefringence gradient in the thickness of the film.

19. Method for manufacturing an optical device (30) according to claim 2, including the steps of:
- manufacturing a liquid crystal cell containing a film formed of a mixture comprising: an agent filtering ultraviolet radiation, a first cholesteric liquid crystal having a first birefringence coefficient and reflecting a predetermined wavelength band, and a second cholesteric liquid crystal having a second birefringence coefficient different from said first birefringence coefficient and reflecting said predetermined wavelength band;
- generating polymerisation of the second liquid crystal in a top portion of the film by irradiating said mixture by ultraviolet radiation from a top face of the cell, so that the second liquid crystal is mostly fixed in said top portion by polymerisation and so that its concentration decreases with the depth (z) in the film.

20. Use of an optical device according to any of claims 1 to 15 as a filter transmitting the incident light outside the spectrum formed by said predetermined wavelength band or bands and reflected selectively by said film or films.
